# EUROPEAN PATENT SPECIFICATION

(11) **EP 3 351 425 B1**
(45) Date of publication and mention of the grant of the patent: **17.03.2021**
(21) Application number: 18151061.1
(22) Date of filing: 10.01.2018
(51) Int. Cl.: B60N 2/28

(54) **HEAD PROTECTIVE MEMBER, CHILD SAFETY SEAT, METHOD OF PROTECTING HEAD**
KOPFSCHUTZELEMENT, KINDERSICHERHEITSSITZ, VERFAHREN ZUM SCHÜTZEN DES KOPFES
ÉLÉMENT DE PROTECTION DE TÊTE, SIÈGE DE SÉCURITÉ ENFANT, PROCÉDÉ DE PROTECTION DE TÊTE

(30) Priority: 20.01.2017 JP 2017008046
(43) Date of publication of application: 25.07.2018
(73) Proprietor: Joyson Safety Systems Japan K.K., Shinagawa-ku Tokyo (JP)
(72) Inventor: SAKUMOTO, Masayuki, Shiga, 529-1388 (JP)
(74) Representative: Banzer, Hans-Jörg

(56) References cited:
- WO-A1-2015/082743
- US-A- 6 139 100
- US-B1- 7 490 909

## Description

### BACKGROUND OF THE INVENTION

### 1. Field of the Invention

The present invention relates to a head protective member, a child safety seat, and a method of protecting the head, and more specifically, to a head protective member, a child safety seat, and a method of protecting the head that are suitable for emergencies such as side collisions of vehicles.

### 2. Description of the Related Art

When placing an infant (babies and small children) who cannot wear a seat belt in a vehicle, a child safety seat is generally used as an apparatus for securing the body of the infant in a seat to ensure the safety. Also, the child safety seat is sometimes referred to as a young person restraint device or an auxiliary device for infants.

Such a child safety seat includes, for example, a seat-shaped main body having a space for accommodating an infant, a seat cushion placed on the inside thereof, and a harness configured to restrain the infant. When a side collision of a vehicle occurs with an infant being secured in a child safety seat, the infant will hit a sidewall of a main body. In this case, for babies who are unable to hold their head up or small children whose neck muscles are not strong enough, their neck and head tend to move in a generally horizontal direction and the head tends to hit the sidewall of the main body.

To restrain the head of such an infant, a child safety seat including a head protective pad has already been proposed (see Japanese Patent No. 4817591, for example). The head protective pad described in Japanese Patent No. 4817591 includes a flexible pad placed to surround from the sides to the top of the head of a young person, an impact absorbing pad placed on the outside thereof, and a fixing pad placed on the outside thereof.

However, in the case of the head protective pad described in Japanese Patent No. 4817591, a material such as urethane and foam materials is used as an impact absorbing pad, and a softer material than the impact absorbing pad such as sponges is used as a flexible pad, causing the flexible pad to be easily pressed and crushed by the neck and head when a side collision of a vehicle occurs. This poses a problem that the impact tends to be large when the head hits the impact absorbing pad. Further, there is also a problem that, since the head protective pad described in Japanese Patent No. 4817591 covers from the sides to the top of the head of an infant, it gives a strong oppressive feeling to the infant and is likely to bring discomfort.

Document US 7,490,909 B1 discloses a head protective member for a child safety seat according to the preamble of claim 1.

Document WO 2015/082743 A1 discloses a head- and neck-securing device for child car seats with L-shaped cushions.
Document US 6,139,100 A discloses a child seat which includes a backrest with a plurality of strap slots formed therein, a seat portion, and a removable headrest. The headrest has a pair of projections each having a pair of leaves that extend outwardly from the other toward opposed peaks and inwardly from the peaks to form a head. The head is rounded and the leaves are flexible, such that upon initial insertion into the strap slots the leaves compress to facilitate ingress of the projection, and upon complete insertion, the leaves expand to inhibit removal of the headrest. The position of the headrest relative to the seat is thus adjustable, according to the size of the child, dependent on into which of the plurality of slots the projections are inserted. The headrest includes a pillow shaped to have a lower portion which helps to support the child's head and deter its forward motion.

### SUMMARY OF THE INVENTION

It is a general object of the present invention, which has been devised to solve the above-described problem, to provide a head protective member as defined in claim 1, a child safety seat, as defined in claim 6, and a method of protecting a head of an infant as defined in claim 7 that mitigate the impact exerted on the head in the event of emergencies such as vehicle side collisions, and thus improve comfort. The dependent claims disclose preferred and advantageous embodiments of the invention.

According to the present invention, a head protective member for placement in a child safety seat for restraining an infant includes a block body configured to be placed between a sidewall of the child safety seat and a neck of the infant, wherein the block body includes a first side that is contactable with the neck of the infant, a second side that is contactable with the sidewall and whose height is higher than the first side, and an inclined face placed between the upper end of the first side and the upper end of the second side. Furthermore, the inclined face is contactable with a lower jaw or a cheek of the infant, and the block body further includes a bottom that is placed between a lower end of the first side and a lower end of the second side and is contactable with a shoulder of the infant. The block body is configured in such a manner that when a head of the infant starts to rotate after the neck moves sideways and a sideways movement of the neck is restricted by the first side, the block body becomes sandwiched between the shoulder and the lower jaw or the cheek of the infant and creates a reactive force from the inclined face and a reactive force from the bottom, allowing kinetic energy of the head to be absorbed.

Further, according to the present invention, a child safety seat includes a main body having a space for accommodating an infant, a seat cushion placed inside the main body, and a harness configured to restrain the infant in the main body. The child safety seat includes the head protective member of the invention.

The above-described head protective pad and child safety seat may be composed of an elastic material or may be composed of a foam material.

Further, the height of the second side is set based on the position of a shoulder and the center of gravity of a head.

Further, the inclined face may be a curved face that is curved in a convex shape.

Further, the inclined face is rotatably connected to the first side and a damping device may be placed on the back face of the inclined face.

Further, according to the present invention, a method of protecting a head of an infant restrained in a child safety seat includes restraining the neck of the infant upon a sideways force being exerted on the infant, while allowing the head of the infant to rotate in such a manner that when the head of the infant starts to rotate after the neck moves sideways and a sideways movement of the neck is restricted by a first side of a block body, the block body becomes sandwiched between the shoulder and the lower jaw or the cheek of the infant and creates a reactive force from the inclined face and a reactive force from the bottom, allowing kinetic energy of the head to be absorbed.

According to a head protective member, a child safety seat, and a method of protecting the head according to the above-described present invention, placing a block body having a predetermined shape between a sidewall of the child safety seat and the neck of an infant allows the head of the infant to rotate along the block body while restraining the neck of the infant upon a sideways force being exerted on the infant. This makes it possible to slow the moving speed of the head sideways by reducing the sideways force exerted on the infant. Therefore, according to the present invention, the impact exerted on the head in the event of emergencies such as vehicle side collisions can be mitigated.

Further, the head protective member is placed near the neck of an infant instead of placing it near the sides or top of the head, making it possible to reduce an oppressive feeling given to the infant who is restrained in a child safety seat, and thus improve comfort.

### BRIEF DESCRIPTION OF THE DRAWINGS

Other objects and further features of the present invention will be apparent from the following detailed description when read in conjunction with the accompanying drawings, in which:
Fig. 1 is an overall perspective view illustrating a child safety seat according to one embodiment of the present invention;
Figs. 2A through 2C are enlarged views of a block body illustrated in Fig. 1, in which Fig. 2A is a perspective view according to a first embodiment, Fig. 2B is a perspective view according to a second embodiment, and Fig. 2C is a cross-sectional view according to a third embodiment;
Figs. 3A and 3B are drawings illustrating the positional relationship between a block body and an infant, in which Fig. 3A illustrates a first embodiment and Fig. 3B illustrates a variation;
Figs. 4A through 4C are drawings illustrating effects of a head protective member according to a first embodiment, in which Fig. 4A illustrates a normal condition, Fig. 4B illustrates a neck constraint condition, and Fig. 4C illustrates a head rotation condition;
Figs. 5A through 5C are drawings illustrating a head protective member according to other embodiments, in which Fig. 5A illustrates a fourth embodiment, Fig. 5B illustrates a fifth embodiment, and Fig. 5C illustrates a sixth embodiment.

### DESCRIPTION OF THE PREFERRED EMBODIMENTS

In the following, embodiments of the present invention will be described with reference to the accompanying drawings.

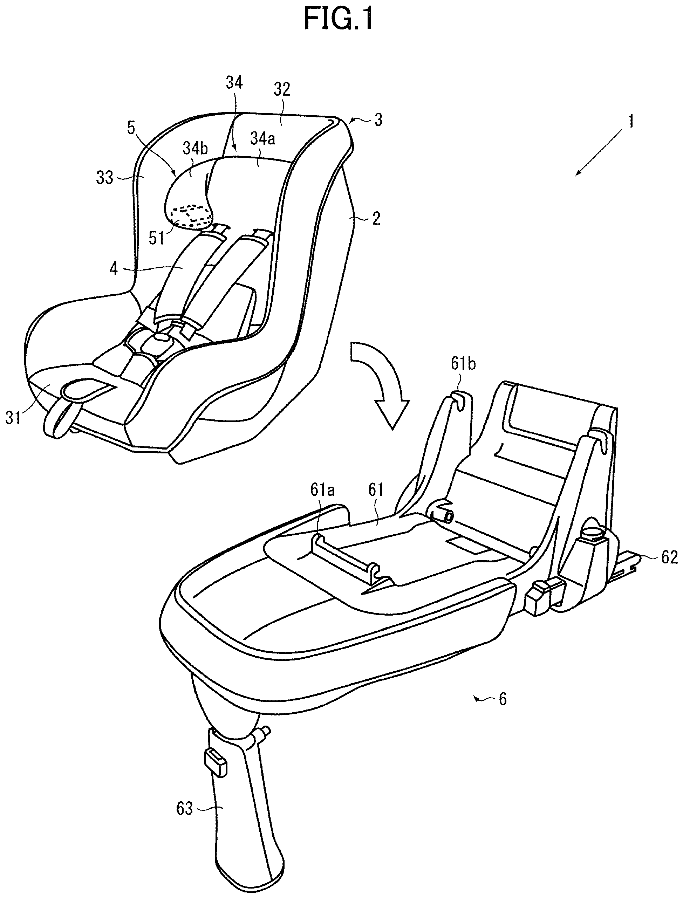

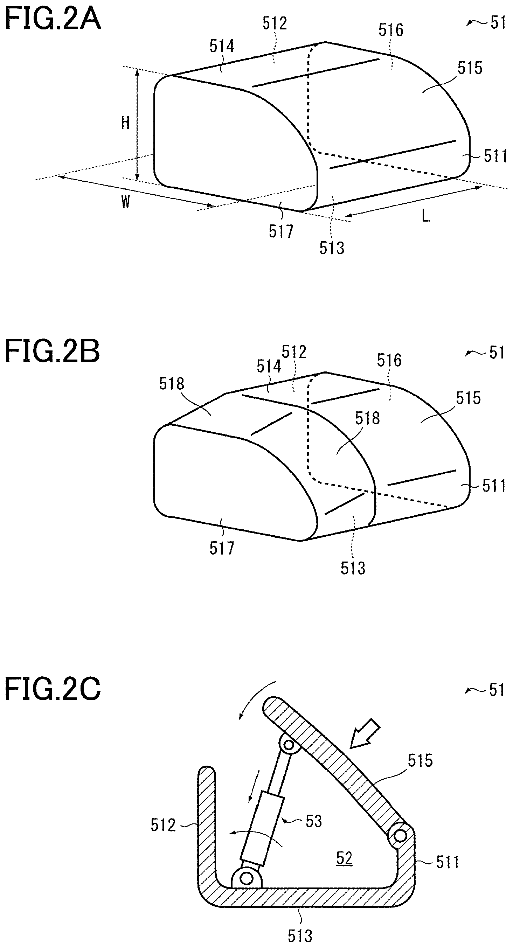

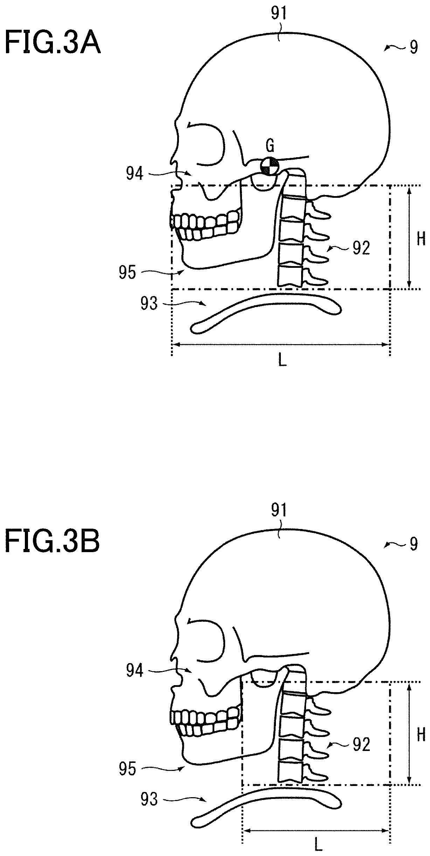

Fig. 1 is an overall perspective view illustrating a child safety seat according to one embodiment of the present invention. Figs. 2A through 2C are enlarged views of a block body illustrated in Fig. 1. Fig. 2A is a perspective view according to a first embodiment, Fig. 2B is a perspective view according to a second embodiment, and Fig. 2C is a cross-sectional view according to a third embodiment. Figs. 3A and 3B are drawings illustrating the positional relationship between a block body and an infant. Fig. 3A illustrates a first embodiment and Fig. 3B illustrates a variation.

As illustrated in Figs. 1, 2A, and 3A, a child safety seat (1) according to one embodiment of the present invention includes a main body (2) having a space for accommodating an infant (9), and a seat cushion (3) placed inside the main body (2), and a harness (4) configured to restrain the infant (9) in the main body (2). The child safety seat (1) includes a head protective member (5) that includes a block body (51) configured to be placed between a sidewall (33) of the seat cushion (3) and a neck (92) of the infant (9), wherein the block body (51) includes a first side (511) that is contactable with the neck (92) of the infant (9), a second side (512) that is contactable with the sidewall (33) and whose height is higher than the first side (511), and an inclined face (515) placed between the upper end of the first side (511) and the upper end of the second side (512).

For example, as illustrated in Fig. 1, the child safety seat (1) includes a base (6) placed on a seat of a vehicle. Fig. 1 illustrates the child safety seat (1) used in a forward-facing position with respect to the moving direction of the vehicle. For example, the base (6) includes a base main body (61) to which the main body (2) of the child safety seat (1) is connected, a connector (62) that is connected to an attachment bar placed on the seat of the vehicle, and a support leg (63) that abuts the floor of the vehicle. The attachment bar to which the connector (62) is connected is mounted between a backrest and a seat portion.

The base main body (61) includes a first attachment portion (61a) and a second attachment portion (61b) connected to the main body (2) of the child safety seat (1). When the child safety seat (1) is used in a forward-facing position, the bottom of the main body (2) is connected to the first attachment portion (61a) and the back of the main body (2) is connected to the second attachment portion (61b). When the child safety seat is used in a rearward-facing position, the back of the main body (2) is connected to the first attachment portion (61a) and the bottom of the main body is connected to the second attachment portion (61b).

The seat cushion (3) placed inside the main body (2) includes a seat portion (31), a backrest (32), and a pair of sidewalls (33). Further, a head cushion (34) is placed where the seat cushion (3) comes into contact with the head (91) of the infant (9). The head cushion (34) includes a head support (34a) that covers the backrest (32) and a side support (34b) that covers the sidewall (33). In the illustrated embodiment, the side support (34b) forms the head protective member (5).

For example, the side support (34b) is composed of a cushion material in a pouch shape and the block body (51) is inserted therein. Moreover, the head cushion (34) may be positioned on the seat cushion (3) using a hook-and-loop fastener.

The basic structure of the above-described child safety seat (1) is merely exemplary and is not limited to the illustrated configuration. For example, the head protective member (5) according to this embodiment may be applied to a child safety seat without the support leg (63) or applied to a shell-shaped child safety seat suitable for babies.

Fig. 3A illustrates a part of the skeleton of the infant (9). For convenience of description, the body structure of the infant (9) will be described with reference to the illustrated skeleton. The head (91) of the infant (9) is supported by the cervical spine that forms the neck (92). The position of the center of gravity (G) of the head is illustrated with a quadrant mark alternately colored black and white. Further, a shoulder (93) of the infant (9) is composed of the clavicle, scapula, shoulder joint, and the like. In Fig. 3A, only the clavicle is illustrated. A cheek (94) refers to a region that includes cheekbones and a lower jaw (95) refers to a region that includes the bottom of the mandible (a portion extending from the tip of the lower jaw to the angle of the mandible).

As illustrated in Fig. 2A, for example, the block body (51) is a columnar body having a five-sided cross-sectional shape made by cutting one corner of a rectangle. More specifically, the block body (51) is formed by the first side (511) placed on the neck (92) side of the infant (9), the second side (512) placed on the sidewall (33) side of the seat cushion (3), the bottom (513) that comes into contact with the shoulder (93) of the infant (9), a top (514) opposite to the bottom (513), the inclined face (515) formed between the first side (511) and the top (514), a back (516) placed on the backrest (32) side of the seat cushion (3), and a front (517) opposite to the back (516).

Further, a border between the bottom (513) and the first side (511), a border between the first side (511) and the inclined face (515), and a border between the inclined face (515) and the top (514) may be smoothly connected to one another to avoid having angles since they could potentially make contact with the infant (9). Moreover, the top (514) may form an inclined face extending from the inclined face (515).

The width, height, and length (depth) of the block body (51) are represented by (W), (H), and (L), respectively. The width (W) is set to fit in a space between the sidewall (33) of the seat cushion (3) and the neck (92) of the infant (9). For example, the width (W) is set to suit the length of the shoulder of the infant (9). Considering the child safety seat (1) is used for babies from newborns to around 1-year-olds and small children from 1-year-olds to around 4-year-olds, the width (W) is set to suit the length of the shoulder of small children of around age 4 (approximately 60 mm, for example) in order to allow small children of around age 4 to use the head protective member (5).

The height (H) of the block body (51) is set so as to cover from the neck (92) to the cheek (94) of the infant (9) as illustrated in Fig. 3A, for example. In general, the center of gravity of the head (G) is located above the cheekbone that forms the cheek (94). The height (H) of the block body (51) is set based on the position of the shoulder and the center of gravity of the head (G) of the infant (9). Namely, the block body (51) is formed to fall within a range extending from the shoulder (93) to the center of gravity of the head (G) of the infant (9). In this case, if the height is set based on small children of around age 4, the height of the block body (51) becomes too high for babies such as newborns. Therefore, the height (H) of the body block (51) is set based on newborns or babies of around 1 year old (approximately 70 mm, for example).

The length of the block body (51) is set based on the thickness (front-to-back width) of the head (91) of the infant (9) as illustrated in Fig. 3A, for example (approximately 130 mm, for example). Since the block body (51) is effective as long as it makes contact with at least the neck (92) of the infant (9), the length (L) may be set to cover from the back of the head to a part of the lower jaw (95) (for example, to the angle of the mandible) as illustrated in Fig. 3B, for example. Shortening the length (L) of the block body (51) makes it possible to reduce an oppressive feeling given to the infant (9).

Furthermore, the dimensions (width (W), height (H), and length (L)) of the block body (51) are merely exemplary and are not limited to the above-described dimensions. For example, a plurality of block bodies (51) of different dimensions may be prepared to match the age and body shape of the infant (9) so that the block body (51) may be replaced as the infant (9) grows up.

The first side (511) of the block body (51) is the part that makes contact with the neck (92) of the infant (9) upon a sideways force being exerted on the infant (9). Further, the second side (512) is the part that makes contact with the sidewall (33) of the seat cushion (3) when a sideways force is exerted on the infant (9). Therefore, when a sideways force is exerted on the infant (9), the neck (92) of the infant (9) can be restrained and a sideways movement of the neck (92) can be restricted by allowing the second side (512) to make contact with the sidewall (33) and allowing the first side (511) to make contact with the neck (92).

Since the neck (92) of the infant (9) makes contact with the block body (51) when a sideways force is exerted on the infant (9), the block body (51) may be composed of an elastic material such as urethane rubber and may be composed of a foam material such as polyurethane and ethylene vinyl acetate crosslinked foam so that the impact can be mitigated by restricting a sideways movement of the infant (9).

Since the head (91) of the infant (9), whose neck (92) is restrained, is not restrained in any way, the head is able to move further sideways. In this case, since the movement of the neck (92) is restricted, the head (91) rotates about the restrained neck (92). The inclined face (51) of the block body (51) has an ability to make contact with the rotating head (91) to absorb the impact while slowing the speed. As the head (91) of the infant (9) rotates, the inclined face (515) makes contact with the lower jaw (95) and then makes contact with the cheek (94). In this case, the inclined face can be brought into smooth contact with the rounded body of the infant (9) by configuring the inclined face (515) to have a curved face that is curved in a convex shape toward the infant (9).

In general, the cheek (94) and the lower jaw (95) of the infant (9) are more protruded sideways than the neck (92). Therefore, in order to prevent the face from being twisted in association with the rotational movement of the head (91), an auxiliary inclined face (518) may be placed that is formed to incline the anterior portions of the top (514) and the inclined face (515) toward the front (517) as in the case of the second embodiment shown in Fig. 2B.

Further, as in the case of the third embodiment shown in Fig. 2C, the block body (51) has a cavity (52), and in the cavity (52), a damping device (53) may be placed to absorb the impact caused when the cheek (94) or the lower jaw (95) of the infant (9) makes contact with the inclined face (515). More specifically, the inclined face (515) is rotatably connected to the first side (511) and the damping device (53) is placed between the back face of the inclined face (515) and the interior face of the bottom (51). The damping device (53) may be a cylinder having an elastic body such as a spring therein or may be an air cylinder. In this embodiment, the respective faces of the block body (51) are preferably composed of a hard resin material rather than an elastic material or a foam material in order to cause the damping device (53) to function in an effective way.

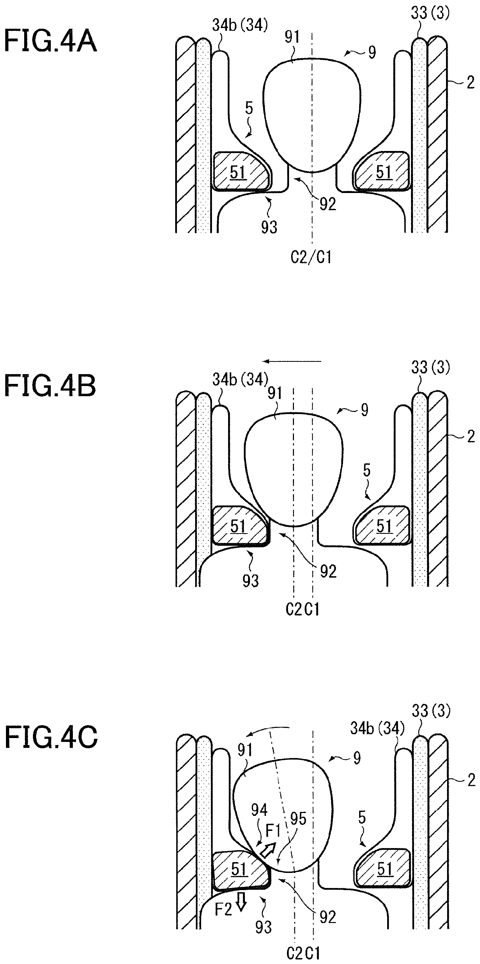

Figs. 4A through 4C are drawings illustrating effects of a head protective member according to a first embodiment. Fig. 4A illustrates a normal condition, Fig. 4B illustrates a neck constraint condition, and Fig. 4C illustrates a head rotation condition. Furthermore, in the respective drawings, (C1) represents the centerline of the child safety seat (1) and (C2) represents the centerline of the infant (9). Further, (C2/C1) in Fig. 4A shows that the centerline (C1) of the child safety seat (1) matches the centerline (C2) of the infant (9).

As illustrated in Fig. 4A, the head protective member (5) is composed of the side support (34b) forming a part of the head cushion (34) and the block body (51) inserted inside the side support (34b). The head protective member (5) is placed inside each of the pair of sidewalls (33) of the seat cushion (3).

Therefore, under normal conditions in which the infant (9) is properly restrained in the child safety seat (1), the head protective member (5) is placed on each side of the neck (92) of the infant (9) . Further, as illustrated in Fig. 4A, the block body (51) is placed near the neck (92) and shoulder (93) of the infant (9), allowing a sufficient gap to be formed between the head (91) of the infant (9) and the side support (34b) on each side. This makes it possible to reduce an oppressive feeling given by the head protective member (5) to the infant (9) and thus improve comfort.

Under such normal conditions, as illustrated in Fig. 4B, a sideways force is exerted on the infant (9) (for example, in a direction shown by an arrow in this figure) when a side collision of a vehicle occurs. In this case, the entire body of the infant (9), including the head (91), moves sideways toward the sidewall (33). Subsequently, the block body (51) is sandwiched between the sidewall (33) and the neck (92), the neck (92) is restrained by the block body (51), and thus a sideways movement of the neck (92) is restricted. During this time, the shoulder (93) of the infant (9) is being pressed against the sidewall (33) of the seat cushion (3).

When the neck (92) of the infant (9) is restrained by the block body (51), the head (91) is able to rotate about the neck (92) in a direction shown by an arrow as illustrated in Fig. 4C since the movement of the head (91) is not restrained. In this case, the inclined face (515) catches the lower jaw (95) and the cheek (94), making it possible to gradually reduce the rotational force of the head (91). When the head (91) starts to rotate, the block body (51) becomes sandwiched between the shoulder (93) and the lower jaw (95) or the cheek (94). This creates the reactive force F1 from the inclined face (515) of the block body (51) and the reactive force F2 from the bottom (513) of the block body (51), allowing kinetic energy of the head (91) to be absorbed.

In this way, the moving speed of the head (91) sideways can be slowed by reducing the rotational force of the head (91). This makes it possible to mitigate the impact caused when the head (91) makes contact with the sidewall (33). Namely, a method of protecting the head of the infant (9) according to this embodiment allows the head (91) of the infant (9) to rotate while restraining the neck (92) of the infant (9) upon a sideways force being exerted on the infant.

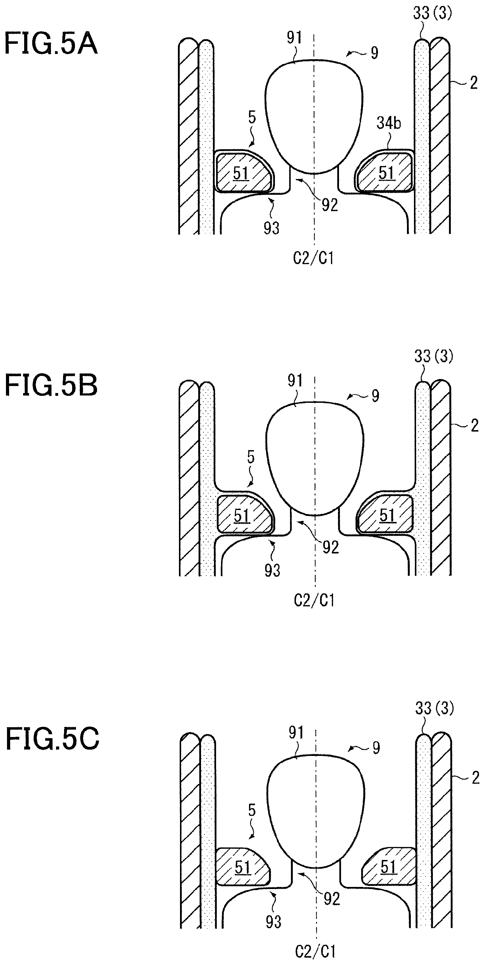

Referring to Figs. 5A and 5B, the head protective member (5) according to other embodiments will be described. Figs. 5A through 5C are drawings illustrating a head protective member according to other embodiments. Fig. 5A illustrates a fourth embodiment, Fig. 5B illustrates a fifth embodiment, and Fig. 5C illustrates a sixth embodiment.

The head protective member (5) according to the fourth embodiment illustrated in Fig. 5A is designed to fit the side support (34b) covering the block body (51) to the shape of the block body (51). According to the head protective member (5) of this embodiment, since the impact caused when the head (91) hits the sidewall (33) can be mitigated, side supports located above each of the block bodies (51) can be omitted.

For the head protective member (5) according to the fifth embodiment illustrated in Fig. 5B, the block bodies (51) are placed inside the sidewalls (33) of the seat cushion (3). In this embodiment, the head protective member (5) is composed of the sidewall (33) of the seat cushion (3) and the block body (51).

The head protective member (5) according to the fifth embodiment illustrated in Fig. 5C is composed of the block body (51) only. The block body (51) is connected to the sidewall (33) of the seat cushion (3) using, for example, a hook-and-loop fastener.

## Claims

1. A head protective member (5) for placement in a child safety seat (1) for restraining an infant (9), comprising,
a block body (51) configured to be placed between a sidewall (33) of the child safety seat (1) and a neck (92) of the infant (9),
wherein the block body (51) includes a first side (511) that is contactable with the neck (92) of the infant (9), a second side (512) that is contactable with the sidewall (33) and whose height (H) is higher than the first side (511), and an inclined face (515) placed between an upper end of the first side (511) and an upper end of the second side (512);
wherein:
the inclined face (515) is contactable with a lower jaw (95) or a cheek (94) of the infant (9); and
the block body (51) further includes a bottom (513) that is placed between a lower end of the first side (511) and a lower end of the second side (512) and is contactable with a shoulder (93) of the infant (9);
**characterized in that**:
the block body (51) is configured in such a manner that when a head (91) of the infant (9) starts to rotate after the neck (92) moves sideways and a sideways movement of the neck (92) is restricted by the first side (511), the block body (51) becomes sandwiched between the shoulder (93) and the lower jaw (95) or the cheek (94) of the infant (9) and creates a reactive force (F1) from the inclined face (515) and a reactive force (F2) from the bottom (513), allowing kinetic energy of the head (91) to be absorbed.

2. The head protective member (5) according to claim 1, wherein the block body (51) is composed of an elastic material or a foam material.

3. The head protective member (5) according to claim 1 or 2, wherein the height (H) of the second side (512) is set based on a position of a shoulder and a center of gravity of the head (91) of the infant (9).

4. The head protective member (5) according to any one of claims 1 to 3, wherein the inclined face (515) is a curved face that is curved in a convex shape.

5. The head protective member (5) according to any one of claims 1 to 4, wherein the inclined face (515) is rotatably connected to the first side (511) and a damping device (53) is placed on a back face of the inclined face (515).

6. A child safety seat (1) comprising:
a main body (2) having a space for accommodating an infant (9);
a seat cushion (3) placed inside the main body (2); and
a harness (4) configured to restrain the infant (9) in the main body (2),
wherein the child safety seat (1) comprises the head protective member (5) according to any one of claims 1 to 5.

7. A method of protecting a head (91) of an infant (9) restrained in a child safety seat (1),
**characterized in that**:
restraining a neck (92) of the infant (9) upon a sideways force being exerted on the infant (9), while allowing the head of the infant (9) to rotate in such a manner that when the head (91) of the infant (9) starts to rotate after the neck (92) moves sideways and a sideways movement of the neck (92) is restricted by a first side (511) of a block body (51), the block body (51) becomes sandwiched between the shoulder (93) and the lower jaw (95) or the cheek (94) of the infant (9) and creates a reactive force (F1) from the inclined face (515) and a reactive force (F2) from the bottom (513), allowing kinetic energy of the head (91) to be absorbed.

8. The method of protecting the head (91) of an infant (9) according to claim 7, wherein the method is carried out. with the aid of the head protective member (5) according to any one of claims 1 to 5.

## Patentansprüche

1. Kopfschutzelement (5) zur Anordnung in einem Kindersicherheitssitz (1), um ein Kleinkind (9) zurückzuhalten, umfassend
einen Blockkörper (51), welcher ausgestaltet ist, um zwischen einer Seitenwand (33) des Kindersicherheitssitzes (1) und einem Hals (92) des Kleinkindes (9) angeordnet zu sein,
wobei der Blockkörper (51) aufweist eine erste Seite (511), welche mit dem Hals (92) des Kleinkindes (9) in Kontakt treten kann, eine zweite Seite (512), welche mit der Seitenwand (33) in Kontakt treten kann und deren Höhe (H) höher als die erste Seite (511) ist, und eine schräge Fläche (515), welche zwischen einem oberen Ende der ersten Seite (511) und einem oberen Ende der zweiten Seite (512) angeordnet ist;
wobei:
die schräge Fläche (515) mit einem Unterkiefer (95) oder einer Wange (94) des Kleinkindes (9) in Kontakt treten kann; und
der Blockkörper (51) darüber hinaus einen Boden (513) aufweist, welcher zwischen einem unteren Ende der ersten Seite (511) und einem unteren Ende der zweiten Seite (512) angeordnet ist und mit einer Schulter (93) des Kleinkinds (9) in Kontakt treten kann;
**dadurch gekennzeichnet,**
**dass** der Blockkörper (51) in solch einer Weise ausgestaltet ist, dass, wenn ein Kopf (91) des Kleinkinds (9) sich zu drehen beginnt, nachdem sich der Hals (92) seitwärts bewegt und eine Seitwärtsbewegung des Halses (92) durch die erste Seite (511) eingeschränkt wird, der Blockkörper (51) zwischen der Schulter (93) und dem Unterkiefer (95) oder der Wange (94) des Kleinkinds (9) eingeklemmt ist und eine rückwirkende Kraft (F1) von der schrägen Fläche (515) und eine rückwirkende Kraft (F2) von dem Boden (513) erzeugt, wodurch eine kinetische Energie des Kopfes (91) absorbiert werden kann.

2. Kopfschutzelement (5) nach Anspruch 1, wobei der Blockkörper (51) aus einem elastischen Material oder einem Schaumstoffmaterial zusammengesetzt ist.

3. Kopfschutzelement (5) nach Anspruch 1 oder 2, wobei die Höhe (H) der zweiten Seite (512) abhängig von einer Position einer Schulter oder einem Schwerpunkt des Kopfes (91) des Kleinkinds (9) eingestellt ist.

4. Kopfschutzelement (5) nach einem der Ansprüche 1 bis 3, wobei die schräge Fläche (515) eine gebogene Fläche ist, welche in einer konvexen Form gebogen ist.

5. Kopfschutzelement (5) nach einem der Ansprüche 1 bis 4, wobei die schräge Fläche (515) drehbar mit der ersten Seite (511) verbunden ist und eine Dämpfungsvorrichtung (53) auf einer Rückfläche der schrägen Fläche (515) angeordnet ist.

6. Kindersicherheitssitz (1) umfassend:
einen Hauptkörper (2) mit einem Raum, um ein Kleinkind (9) aufzunehmen;
ein Sitzpolster (3), welches auf einer Innenseite des Hauptkörpers (2) angeordnet ist; und
eine Halterung (4), welche ausgestaltet ist, um das Kleinkind (9) in dem Hauptkörper (2) zurückzuhalten,
wobei der Kindersicherheitssitz (1) das Kopfschutzelement (5) nach einem der Ansprüche 1 bis 5 umfasst.

7. Verfahren zum Schützen eines Kopfes (91) eines Kleinkinds (9), welches in einem Kindersicherheitssitz (1) zurückgehalten wird,
**dadurch gekennzeichnet, dass**:
ein Hals (92) des Kleinkinds (9) zurückgehalten wird, wenn eine seitliche Kraft auf das Kleinkind (9) ausgeübt wird, während sich der Kopf des Kleinkinds (9) in solch einer Weise drehen kann, dass, wenn sich der Kopf (91) des Kleinkinds (9) zu drehen beginnt, nachdem sich der Hals (92) seitwärts bewegt, und eine Seitwärtsbewegung des Hals (92) durch eine erste Seite (511) eines Blockkörpers (51) eingeschränkt wird, der Blockkörper (51) zwischen der Schulter (93) und dem Unterkiefer (95) oder der Wange (94) des Kleinkinds (9) eingeklemmt wird und eine rückwirkende Kraft (F1) von der schrägen Fläche (515) und eine rückwirkende Kraft (F2) von dem Boden (513) erzeugt, wodurch eine kinetische Energie des Kopfes (91) absorbiert werden kann.

8. Verfahren zum Schützen des Kopfes (91) eines Kleinkinds (9) nach Anspruch 7, wobei das Verfahren mit Hilfe des Kopfschutzelements (5) nach einem der Ansprüche 1 bis 5 ausgeführt wird.

## Revendications

1. Elément de protection de la tête (5) destiné à être placé dans un siège de sécurité pour enfant (1) pour retenir un enfant (9), comprenant
un corps de bloc (51) configuré pour être placé entre une paroi latérale (33) du siège de sécurité pour enfant. (1) et un cou (92) de l'enfant (9),
dans lequel le corps de bloc (51) comprend un premier côté (511) qui est susceptible de venir en contact avec le cou (92) de l'enfant (9), un deuxième côté (512) qui est susceptible de venir en contact avec la paroi latérale (33) et dont la hauteur (H) est supérieure à celle du premier côté (511), et une face inclinée (515) placée entre une extrémité supérieure du premier côté (511) et une extrémité supérieure du deuxième côté (512) ;
dans lequel :
la face inclinée (515) est susceptible de venir en contact avec une mâchoire inférieure (95) ou une joue (94) de l'enfant (9) ; et
le corps de bloc (51) comprend en outre un fond (513) qui est placé entre une extrémité inférieure du premier côté (511) et une extrémité inférieure du deuxième côté (512) et est susceptible de venir en contact avec un épaule (93) de l'enfant (9) ;
**caractérisé en ce que** :
le corps de bloc (51) est configuré de telle manière que lorsqu'une tête (91) de l'enfant (9) commence à tourner après que le cou (92) se déplace latéralement et un mouvement latéral du cou (92) est limité par le premier côté (511), le corps de bloc (51) devient pris en sandwich entre l'épaule (93) et la mâchoire inférieure (95) ou la joue (94) de l'enfant (9) et crée une force réactive (F1) de la face inclinée (515) et une force réactive (F2) du fond (513), permettant à l'énergie cinétique de la tête (91) d'être absorbée.

2. Elément de protection de tête (5) selon la revendication 1, dans lequel le corps de bloc (51) est composé d'un matériau élastique ou d'un matériau en mousse.

3. Elément de protection de la tête (5) selon la revendication 1 ou 2, dans lequel la hauteur (H) du deuxième côté (512) est établie en fonction d'une position d'épaule et d'un centre de gravité de la tête (91) de l'enfant (9).

4. Élément de protection de tête (5) selon l'une quelconque des revendications 1 à 3, dans lequel la face inclinée (515) est une face courbe qui est bombée de forme convexe.

5. Elément de protection de tête (5) selon l'une quelconque des revendications 1 à 4, dans lequel la face inclinée (515) est reliée en rotation au premier côté (511) et un dispositif d'amortissement (53) est placé sur une face arrière de la face inclinée (515).

6. Un siège de sécurité pour enfant (1) comprenant :
un corps principal (2) ayant un espace qui peut accueillir un enfant (9) ;
un coussin de siège (3) placé à l'intérieur du corps principal (2) ; et
un harnais (4) configuré pour retenir l'enfant (9) dans le corps principal (2),
dans lequel le siège de sécurité pour enfant (1) comprend l'élément de protection de la tête (5) selon l'une quelconque des revendications 1 à 5.

7. Procédé de protection d'une tête (91) d'un enfant (9) retenu dans un siège de sécurité pour enfant (1),
**caractérisé par** le fait de
retenir un cou (92) de l'enfant (9) suite à l'application d'une force latérale sur l'enfant (9), tout en permettant la tête de l'enfant (9) de tourner de telle manière que lorsqu'une tête (91) de l'enfant (9) commence à tourner après que le cou (92) se déplace latéralement et un mouvement latéral du cou (92) est limité par un premier côté (511) d'un corps de bloc (51), le corps de bloc (51) devient pris en sandwich entre l'épaule (93) et la mâchoire inférieure (95) ou la joue (94) de l'enfant (9) et crée une force réactive (F1) de la face inclinée (515) et une force réactive (F2) du fond (513), permettant à l'énergie cinétique de la tête (91) d'être absorbée.

8. Procédé de protection de la tête (91) d'un enfant (9) selon la revendication 7, dans lequel le procédé est mis en œuvre à l'aide de l'élément de protection de la tête (5) selon l'une quelconque des revendications 1 à 5.
